# EUROPEAN PATENT APPLICATION

(11) **EP 1 955 755 A2**
(43) Date of publication of application: **13.08.2008**
(21) Application number: 08151153.7
(22) Date of filing: 07.02.2008
(51) Int. Cl.: B01D 47/05, C02F 1/04

(54) **Method and device for purifying flue gas containing fine particles**

(30) Priority: 07.02.2007 FI 20070111
(71) Applicant: Penttinen, Samuli, 40950 Muurame (FI)
(72) Inventor: Penttinen, Samuli, 40950 Muurame (FI)
(74) Representative: Helke, Kimmo Kalervo

(57) **Abstract**

The invention relates to a method and device for purifying flue gas containing fine particles, in which method the flue gas is cooled to below the condensation point of water vapour and the fine particles in the flue gas are bound mainly to drops and/or to a liquid film.

## Description

The present invention relates to a method for purifying flue gas containing fine particles, in which method the flue gas is cooled to below the condensation point of water vapour and the fine particles in the flue gas are bound mainly to drops and/or to a liquid film, the water of which with the fine particles is collected from the flow of flue gas.

During combustion, impurities arise that are detrimental to nature and people. Recently, fine-particle emissions in particular have received much attention. Because increasingly smaller fireboxes sizes have been examined, in practice the matter concerns heating plants of all sizes, i.e. from the size of the boiler in a one-family house to large power plants. In large units, so-called electro-filters are used, but these become very expensive at a small scale. Another alternative is the various kinds of flue-gas washers in which water is sprayed to the flue gas flow, which water collects fine particles and other impurities. Sprayed water drops to the bottom of the washer, from where it is pumped again to the nozzles.

Finnish patent 108404 discloses a flue-gas washer, which also recovers heat. The flue gases are strongly cooled in washing and correspondingly the wash water heats up. The heat can be easily led to a desired point of use, thus also achieving a considerable saving in fuel. This is due particularly to the fact that a higher thermal value is obtained for the fuel. Usually, only a lower thermal value can be exploited, when the water in the flue gases exits in a gaseous form and its heat of evaporation is thus lost. Systems exploiting the higher thermal value have not become widely used due to their expense, which is due to the extra consumption caused by the washer. Previously, it was held to be axiomatic that the final temperature of flue gases must not drop below the boundary temperature typical of the fuel, so that a condensation phenomenon would not occur in either the boiler or the chimney.

Besides a boiler, a combustion plant also requires a chimney and a washer or electro-filter or similar between them.

Fine-particle emissions are also a problem in traffic. Diesel engines produce a considerable amount of fine particles.

The present invention is intended to create an entirely new type of method and device for binding fine particles and for generally reducing emissions in combustion. The characteristic features of the method according to the invention are stated in the accompanying Claim 1 while correspondingly the characteristic features of the device are stated in Claim 8. The invention is based largely on the insight that there is a considerable amount of water in flue gases. Though a sufficient amount of water for operation according to the invention is created purely as a result of combustion, moisture in the fuel will increase the amount of water in the flue gases, which can be taken into account in the design of the cleaning device. The fine particles, fly ash, and chemical compounds in the flue gas, which condense at a temperature of less than 40°C at normal pressure, can be removed from flue gases using this method. Generally, the condensation of flue gas is an undesirable phenomenon, as it causes disintegration and corrosion in the chimney and other duct components and leads to noxious waste. In a preferred embodiment of the invention, the water vapour of the flue gas is exploited by condensing it twice. The dirty water obtained in the first condensation is distilled using the heat of the flue gas, the end result being clean water and waste in a solid form, which can be easily disposed of. The chimney-shaped cleaner has a diameter that is typically 30 % larger than that of a conventional chimney.

In the vertical-type heat exchanger, in a special chimney, water drops and the water film descend through the effect of gravity. The fine particles act as condensation surfaces, to which the supercooled water molecules adhere as liquid. This is a question of so-called diffusion-phoretic deposition. Once a sufficient amount of condensation has accumulated, a drop that arises descends, despite the flue-gas flow. It is obvious that the height of the heat exchanger, the efficiency of the cooling, the flow velocity, and some other technical factors in the heat exchanger will affect how much condensate will be condensed and collected from the water vapour in the flue gas. Naturally, some of the particles will adhere to the liquid film on the inner surface of the pipes. Brownian motion and the charge state and charging in motion relate to the adhesiveness of the particles. It is obvious that too high a flow velocity relative to the other factors will remove the small drops that arise, along with their fine particles, before they can grow sufficiently in mass. Generally, the flow velocity is 2 - 20 m/s, but, according to the above, the optimal value at any time depends on many factors. In principle, a reduction in flow velocity will improve the cleaning result, but increasing investment costs will set a limit to this.

A type of heat exchanger, in which the flow velocity is used to drive the water drops and other loose water into a separator after the heat exchanger, is particularly suitable for cleaning the flue gases of diesel engines in vehicles. In such a case, the attitude of the heat exchanger can vary according to the vehicle.

The method can be applied to small and medium-sized combustion plants using all kinds of fuels, as well as to stationary engines. Examples of applications include heating boilers in one-family houses, district-heating plants, generating stations, and ships' engines. The use of the device will cut fuel consumption in heating by an average of 20 %, as the higher thermal value of the fuel can be exploited. The method solves the fine-particles problems caused by small-scale combustion. The reduction in fine-particle emissions is 50 % or greater.

One preferred device-technical embodiment is a chimney construction, in which the flue gas is led in a pipe through a cooling-water chamber, while in its lower part a collection chamber is formed, in which a condensation vessel is located for collecting the dirty water for re-evaporation. Such a chimney has a diameter, which is only about 30 % greater than that of a conventional chimney.

In the following, the invention is examined with the aid of examples, which are depicted in the accompanying drawings.
- Figure 1: shows one chimney cleaner according to the invention, in connection with a heating boiler,
- Figure 2: shows the lower chamber of the cleaner of Figure 1, together with its collection and evaporation vessels,
- Figure 3: shows an embodiment of the cleaner, intended for a diesel engine in a vehicle.

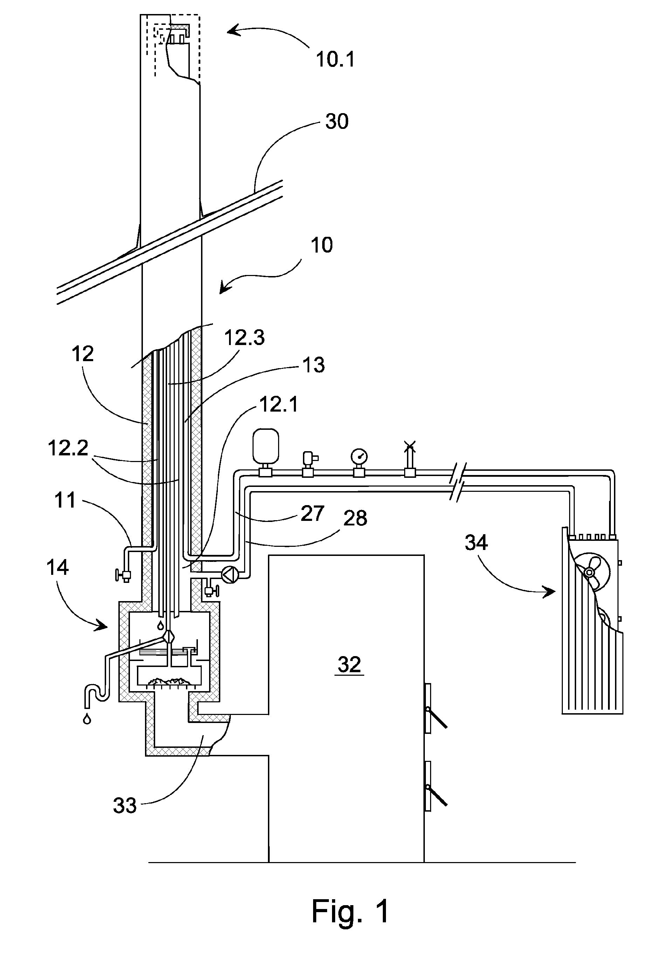

According to Figure 1, the cleaner according to the invention is connected directly to the heating boiler 32 through a connector 33. The cleaner is built inside the chimney 10, for which a feed-through has been made in the roof 30. In this case, the chimney 10 comprises a heat-exchanger component 12 and a chimney cap 10.1, which prevents freezing air from entering the flue. Below the heat exchanger 12 is an integrated separator and evaporator chamber 14. Both of these are insulated with a conventional insulated lining 15 (insulator layer + shell of sheet metal). A vent pipe 11 extends to the very top of the water chamber 12.1 of the heat exchanger 12. It can be used to remove air that collects there.

The cooling of the heat exchanger 12 is implemented locally in a suitable manner. The example shown in Figure 1 shows a blower unit 34, which produces heat, for example, for an air-heating system. Naturally, an under-floor heating system, or in larger plants the pre-heating of the return water will provide suitable heating applications, from which the cooling effect required here can be obtained. The radiator unit 34 is connected by pipes 27 and 28 to the water chamber 12.1 of the heat-exchanger 12. Exceptionally, the heat exchanger 12 operates on the parallel-flow principle, in which the flue gas cools and the circulating water heats as they rise. The counter-flow principle would lead to condensation at the lower ends of the pipes, which would dirty them.

The flue gas enters the chamber 14, from where it is led along the pipes 12.2 of the heat exchanger 12 through the water chamber 12.1 to the top of the chimney, where it will have cooled to about 40°C. All of the water vapour will then have condensed.

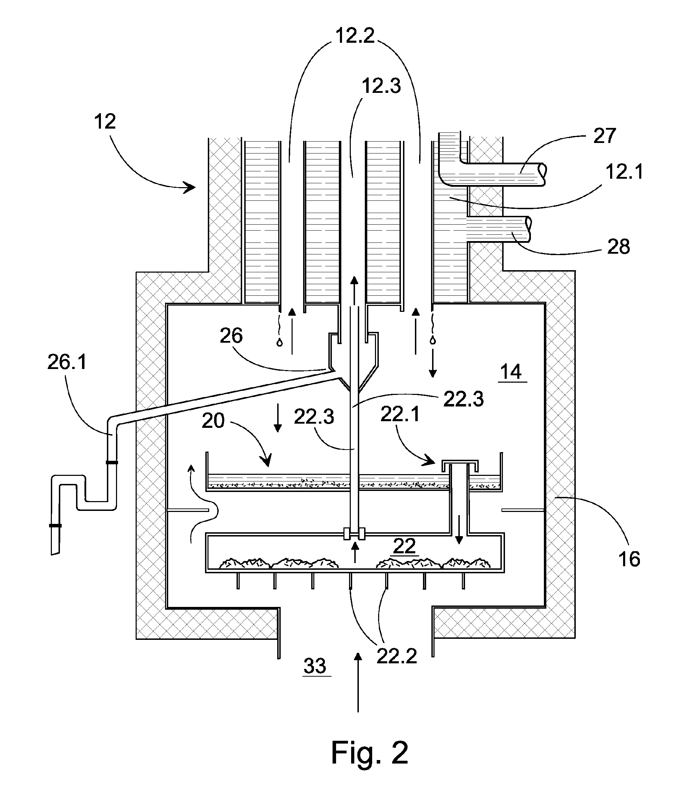

According to Figure 2, there is a connection 33 to the bottom of the chamber 14. The first hot flue gases meet the evaporation vessel 22 with its fins 22.2. The flue gases flow around this evaporation vessel 22 and the collection tank 20 somewhat cooled, after which they enter the pipe 12.2 of the heat exchanger 12 connected to the upper part of the chamber 14, in which they cool as described above.

When the flue gases cool to substantially less than 100°C, the water vapour in the flue gases condenses not only on the inner surface of the pipes, but also on the fine particles. The impurities remain in the condensed water. The dirty condensation water flows downwards and drops into the collection tank 20. Here the sediment can settle slightly while the overflow connection 22.1 leads the liquid to the evaporation vessel 22, but does not allow the vapour to escape. The water that has flowed into the evaporation vessel 22 evaporates quite quickly, so that the impurities remain as a solid sediment on the bottom of it.

The solids are removed from the collection tank 20 and the evaporation vessel 22 at regular intervals, for example, in connection with the sweeping of the boiler. For this purpose, the chamber 14 can be opened and the said vessels removed (not shown).

The water vapour evaporated in the evaporation vessel 22 is led through the pipe 22.3 to the central condensation pipe 12.3, which is closed to flue gases on the side of the chamber 14. The condensation pipe 12.3 re-condenses the clean water and at the same time recovers its heat of evaporation. The re-condensed water flows into a vessel 26 and from there out along the exit pipe 26.1. The outgoing water is so clean that it can be led to the drain. Practically no gases exhaust from the upper end of the pipe 12.3.When using wood pellets, 1/3 of the thermal energy of the flue gases is consumed in the evaporation taking place in the evaporation vessel 22, 1/3 in the evaporation taking place in the collection tank, and only 1/3 in the heat exchanger itself. Both evaporations are recovered as a result of the condensation in the heat exchanger.

The above apparatus can be adapted in many ways within the scope of the same inventive idea. Because the most essential feature is the binding of impurities to condensing water, the dirty water could be only collected and removed and taken entirely to separate waste-water treatment. In one variation, the re-condensation could be relinquished and the clean steam released directly. On the other hand, in the example described above the outgoing distillate would permit it to be used, in such a way that part of it would be sprayed into the flue gases, thus creating a conventional washer operation, in addition to the new type of the basic cleaning described above.

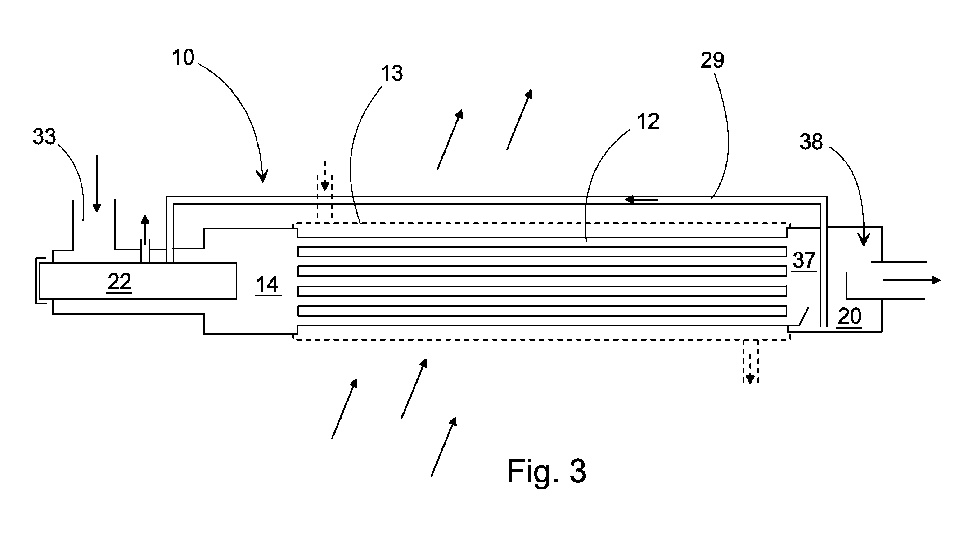

Figure 3 shows an air-cooled variation of the cleaner of the flue gas, particularly for a vehicle. In Figure 3, the same reference numbers as above are used for components that are functionally similar. The exhaust gases of a diesel engine come through a connection 33 at a considerable positive pressure to a chamber 14, where first of all they meet an evaporator 22. From the chamber 14 the exhaust gases are led to the air-cooled pipes 12.2 of the heat exchanger. In these, the water vapour condenses onto both the inner surfaces of the pipes 12.2 and the fine particles, but now all the condensed water is led by the pressure of the exhaust gases to an end chamber, in which there is a drop separator 38 and a collection tank 20. The collection tank is shaped in such a way as to ensure that the cleaner can be rotated even to a considerable extent from a horizontal attitude along with the vehicle, without disturbing its operation.

The pressure of the exhaust gases drives the dirty water that has collected in the collection tank to the evaporator 22, along a pipe 29. In the evaporator 22 the dirty water is reevaporated, when the impurities remain in the evaporator. The steam leaving the evaporator is clean. Naturally, in this case too it is possible to use liquid cooling. The walls of the chamber of this are marked with broken lines.

## Claims

1. Method for purifying flue gas containing fine particles, in which method the flue gas is cooled to below the condensation point of water vapour and the fine particles in the flue gas are bound mainly to drops and/or to a liquid film, the water of which together with the fine particles is collected from the flow of flue gas, **characterized in that** the drops and/or the liquid film are created mainly from the water contained in the flue gases when it condenses.

2. Method according to Claim 1, **characterized in that** the flue gases are led into an elongated heat exchanger (12), in which the flow of the flue gases is on one side of the heat-exchange wall and the flow of the medium to be cooled is on the other side of the wall.

3. Method according to Claim 2, **characterized in that** the flue-gas flow is guided into several pipes (12.2) and the medium flow to the outside of the pipes (12.2).

4. Method according to any of Claims 1 - 3, **characterized in that** the collected water, together with the fine particles, is distilled to separate the fine particles from the water, which, after evaporation and condensation, is removed in a form essentially free of fine particles.

5. Method according to any of Claims 1 - 4, **characterized in that** the flow velocity of the flue gases during the condensation of the water vapour and in the final stage of cooling is 2 - 20 m/s.

6. Method according to any of Claims 1 - 5, **characterized in that**, during the condensation of the water vapour, the flue gases are guided upwards, in such a way that the condensed water flows downwards by gravity.

7. Method according to any of Claims 1 - 5, **characterized in that**, when the water vapour condenses, the condensed water is separated from the flue gases after the heat exchanger.

8. Device for cleaning flue gas containing fine particles, which system includes a heat exchanger (12) for cooling the flue gas to below the condensation point of water vapour, comprising a heat-exchange wall (12.2) separating a flue-gas duct and a medium duct (12.1) in order to cool the flue gas, **characterized in that** the condensate collection vessel (20) is at one end of the flue-gas duct.

9. Device according to Claim 8, **characterized in that** the heat exchanger (12) is vertical, in which case the collection vessel (20) is at its lower end.

10. Device according to Claim 8 or 9, **characterized in that** the heat exchanger (12) comprises a medium chamber (12.1) and several pipes (12.2) penetrating it for leading the flue gas through the medium chamber (12.1).

11. Device according to any of Claims 8 - 10, **characterized in that** the evaporation vessel (22) is connected to the condensate collection tank (20) and has in turn condensation means (12.3) connected to it, in order to distill the separated water.

12. Device according to any of Claims 8 - 11, **characterized in that** the device is formed in connection with a chimney (10).
